# EUROPEAN PATENT SPECIFICATION

(11) **EP 3 473 606 B1**
(45) Date of publication and mention of the grant of the patent: **22.02.2023**
(21) Application number: 17815625.3
(22) Date of filing: 07.06.2017
(51) Int. Cl.: C04B 35/26, C04B 35/64, H01F 1/36, C04B 35/626, C01G 49/00

(54) **FERRITE SINTERED MAGNET**
FERRITSINTERMAGNET
AIMANT FRITTÉ EN FERRITE

(30) Priority: 20.06.2016 KR 20160076841
(43) Date of publication of application: 24.04.2019
(73) Proprietor: Union Materials Corporation, Daegu 42721 (KR)
(72) Inventor: KIM, Minho, Pohang-si Gyeongsangbuk-do 37840 (KR); LEE, Dongyoung, Pohang-si Gyeongsangbuk-do 37650 (KR); LEE, Jung-whan, Pohang-si Gyeongsangbuk-do 37841 (KR); CHEONG, Eunseon, Pohang-si Gyeongsangbuk-do 37848 (KR)
(74) Representative: Vossius & Partner Patentanwälte Rechtsanwälte mbB
(86) International application number: PCT/KR2017/005878
(87) International publication number: WO 2017/222212

(56) References cited:
- JP-A- 2015 130 493
- JP-A- 2015 130 493
- KR-A- 20070 017 466
- KR-A- 20140 114 057
- KR-A- 20150 048 256
- KR-B1- 101 082 389
- US-A1- 2015 170 811

## Description

### Technical Field

The present invention relates to a sintered ferrite magnet using a ferrite magnetic material that is inexpensive as compared with the conventional ferrite magnetic materials and capable of providing a high maximum energy product ((BH)ₘₐₓ).

### Background Art

A ferrite has a hexagonal crystal structure of magnetoplumbite type (or M type). A ferrite is a material whose magnetic properties are not easily changed by the direction and magnitude of a magnetic field. It is commonly used as a material for permanent magnets to be employed in automobile electric motors, rotors for electric devices, and the like. A ferrite is characterized in that it is inexpensive since it is produced by a general process for producing ceramics from strontium carbonate and iron oxide, which are inexpensive among the permanent magnet materials.

Meanwhile, it has been recently demanded that motors become smaller in size and more efficient due to environmental problems and various laws and regulations related to energy saving in accordance therewith, and permanent magnets are also required to have better performance.

The representative magnetic properties of a permanent magnet include residual magnetic flux density (Br), intrinsic coercive force (iHc), maximum energy product ((BH)ₘₐₓ), and squareness ratio (Hknie/iHc). The intrinsic coercive force and the residual magnetic flux density meet the following relationships:
Br = 4πIs × ρ × f (Is: saturation magnetization; ρ: density; and f: degree of orientation)
iHc = H_{A} × fc (H_{A}: anisotropic magnetic field; and fc: volume ratio of single magnetic domains).

The residual magnetic flux density (Br) is proportional to the saturation magnetization, which is the sum of the spin magnetic moments of a composition, the density, and the degree of orientation. The density and the degree of orientation are physical properties materialized after fine pulverization in the process for preparing a ferrite. They can be attained up to about 95% of the theoretical values by process optimization. The theoretical value of the saturation magnetization of a strontium ferrite (hereinafter referred to as "Sr-ferrite") at room temperature is known to be 74 emu/g (4πIs = 4,760 G, when the density and the degree of orientation are 100%, respectively). The saturation magnetization is increased by an increase in the spin magnetic moments in a substituted ferrite composition.

The intrinsic coercive force (iHc) is proportional to the anisotropic magnetic field and the volume ratio of single magnetic domains. It is known that the theoretical value of the anisotropic magnetic field of a single magnetic domain of a Sr-ferrite is 20,000 Oe and that the crystal size of a single magnetic domain is about 1 µm. A high coercive force value can be achieved by increasing the volume ratio of single magnetic domains by process optimization after fine pulverization in the process for preparing a ferrite. It is possible to achieve about 40% (7,700 Oe) of the theoretical value due to the internal demagnetizing field when an Sr-ferrite is in the size of a single magnetic domain, and a higher anisotropic magnetic field value can be achieved by substituting some of the Fe ions with an element having a high magnetic anisotropy such as Co, Cr, Al, or the like.

In the meantime, the maximum energy product ((BH)ₘₐₓ) is the product of the magnetic flux density (B) provided by a magnet and the magnetic field (H) applied to the magnet at each operating point on BH curves, which stands for the energy accumulated inside the magnet. On each demagnetization curve, the point at which the product of B and H is a maximum represents the maximum energy product. In general, a permanent magnet having high values of Br, iHc, and squareness ratio would have a high maximum energy product. A motor applied the permanent magnet has a high output and a low demagnetization caused by an external magnetic field. As a result, the maximum energy product is a representative performance index of a permanent magnet.

For example, U.S. Patent No. 5,846,449 (Patent Document 1) discloses that in the case where some of Fe is substituted with Zn and some of Sr is substituted with La, a ferrite magnet having an improved saturation magnetization is obtained as compared with the conventional compositions in which some of Fe is substituted with Co. However, the ferrite magnet in which some of Fe is substituted with Zn involves a problem that the maximum energy product is lowered to 5.14 MGOe due to an abrupt decrease in the anisotropic magnetic field.

In addition, Korean Patent No. 10-0910048 (Patent Document 2) discloses a technique of improving the residual magnetic flux density and the intrinsic coercive force by way of substituting some of Ca with a rare earth element such as La and substituting some of Fe with Co, thereby producing a maximum energy product of 42.0 kJ/m³ (or about 5.28 MGOe). However, there is a problem that the magnetic properties of a magnet obtained in accordance with Patent Document 2 are not sufficiently high as compared with the conventional Sr-ferrite magnets (Patent Document 1).

Further, Korean Patent No. 10-1082389 (Patent Document 3) discloses a method of obtaining high values of residual magnetic flux density, intrinsic coercive force, and squareness ratio by way of substituting some of Ca with Sr, Ba, and La, and substituting some of Fe with Co and Cr. However, the maximum energy product of a magnet obtained by this method is 5.29 MGOe, which is not sufficiently high as compared with the conventional Sr-ferrite magnets (Patent Document 1).

In addition, Korean Patent No. 10-0910048 (Patent Document 2) discloses that 0.5 of La and 0.3 of Co as content ratios are required in order to obtain a maximum magnetic energy of 5.28 MGOe. Korean Patent No. 10-1082389 (Patent Document 3) discloses that 0.415 of La and 0.316 of Co as content ratios are required in order to obtain a maximum magnetic energy of 5.29 MGOe. However, La and Co are raw materials that are more expensive than iron oxide, which is the main component of a sintered ferrite magnet, by several tens times to about 100 times. Thus, the production cost of a sintered ferrite magnet is significantly increased as their contents are increased.

JP 2015 130493 A (Patent Document 4) discloses a sintered ferrite magnet having a primary phase of a ferrite phase having a hexagonal crystal structure, wherein the element constituting the primary phase comprises a composition represented by Ca_{0.46}Sr_{0.15}La_{0.39}Fe_{9.25}Co_{0.28}O₁₉. In addition, US 2015/170811 A1 (Patent Document 5) discloses a sintered ferrite magnet comprising a ferrite having a hexagonal crystal structure as a main component, wherein the element composition included in the main component is represented by Ca_{0.46}Sr_{0.15}La_{0.39}Fe_{8.75}Co_{0.28}, Ca_{0.46}Sr_{0.15}La_{0.39}Fe_{9.16}Co_{0.27}, Ca_{0.46}Sr_{0.15}La_{0.39}Fe_{8.84}Co_{0.26}, Ca_{0.46}Sr_{0.15}La_{0.39}Fe_{9.11}Co_{0.26}, or Ca_{0.46}Sr_{0.15}La_{0.39}Fe_{9.13}Co_{0.26}.

As described above, the ferrite magnetic materials of known compositions are more expensive than the price demanded in the market and still have unsatisfactory magnetic properties. There has been a demand for a magnetic material that is inexpensive as compared with the conventional magnetic materials and has excellent magnetic properties.

### Detailed Description of the Invention

### Technical Problem

As a result of continued research to achieve the above object, the present inventors have discovered a ferrite magnetic material that is inexpensive as compared with the conventional ferrite magnetic materials and capable of providing a high maximum energy product by virtue of a high saturation magnetization and a high anisotropic magnetic field by way of combining the elements that can improve the saturation magnetization and the anisotropic magnetic field at the same time in a ferrite composition that comprises less than 0.4 of La and less than 0.3 of Co as content ratios, whereby the present inventors have completed the present invention.

Accordingly, an object of the present invention is to provide a ferrite magnetic material, which is inexpensive by lowering the respective contents of La and Co and capable of providing a high maximum energy product, and a sintered ferrite magnet obtained by sintering the same.

### Solution to the Problem

In order to achieve the above object, the present invention provides a sintered ferrite magnet as defined in the appended claims, which is obtainable by sintering a ferrite magnetic material, which comprises a primary phase of a magnetoplumbite phase having a hexagonal structure, wherein the elements constituting the primary phase comprise a composition represented by the following Formula 1:

[Formula 1] Ca_{(1-x-y)}SrₓLa_{y}Fe₍₂ₙ₋ₘ₎CoₘO₁₉

wherein
0.32 ≤ y ≤ 0.394,
0.251 ≤ m ≤ 0.29,
0.42 ≤ 1-x-y ≤ 0.52, and
9.0 ≤ 2n ≤ 10.0.

### Advantageous Effects of the Invention

As described above, the sintered ferrite magnet according to the present invention obtainable by sintering the ferrite magnetic material has a high maximum energy product ((BH)ₘₐₓ) although it is inexpensive as compared with the conventional magnetic materials. Thus, it can meet the recent demand for a motor that is highly efficient and smaller in size.

### Brief Description of the Drawings

Fig. 1 is a graph showing the change in the maximum energy product ((BH)ₘₐₓ) with respect to a change in the content of Co (m) of the sintered ferrite magnet obtained in Preparation Example 1.
Fig. 2 is a graph showing the change in the maximum energy product ((BH)ₘₐₓ) with respect to a change in the content of La (y) of the sintered ferrite magnet obtained in Preparation Example 2.

### Best Mode for Carrying out the Invention

The ferrite magnetic material usable in the sintered ferrite magnet of the present invention comprises a primary phase of a magnetoplumbite phase having a hexagonal structure, wherein the elements constituting the primary phase comprise a composition represented by the following Formula 1:

[Formula 1] Ca_{(1-x-y)}SrₓLa_{y}Fe₍₂ₙ₋ₘ₎CoₘO₁₉

When the content of La (y) is in the range of 0.32 to 0.394, a high saturation magnetization and a high anisotropic magnetic field can be obtained, whereby a high maximum energy product can be obtained. More preferably, the content of La is in the range of 0.35 to 0.394. If the content of La (y) is within the above range, it is possible to prevent an increase in the costs and to prevent the problem that a high maximum energy product is not obtained since a non-magnetic phase is generated, which reduces the saturation magnetization and the anisotropic magnetic field at the same time, or the content of solid solution of La is reduced.

When the content of Co (m) is in the range of 0.251 to 0.29, it is possible to obtain a high maximum energy product. If the content of Co (m) is within the above range, it is possible to prevent an increase in the costs and to prevent the problem that the maximum energy product is reduced since the saturation magnetization and the anisotropic magnetic field are reduced at the same time due to a decrease in the content of substitutional solid solution of Co or the phase becomes unstable at certain sintering temperatures.

When the content of Ca (i.e., 1 - x - y) is in the range of 0.42 to 0.52, it is possible to obtain a high maximum energy product. More preferably, the content of Ca is in the range of 0.44 to 0.50. If the content of Ca (i.e., 1 - x - y) is within the above range, it is possible to prevent the problem that the maximum energy product is reduced since the phase becomes unstable at certain sintering temperatures; or that the maximum energy product is reduced since the content of substitutional solid solution of Ca is reduced.

2n is a value that stands for the content ratio of (Fe + Co)/(Ca + Sr + La). When 2n is in the range of 9.0 to 10.0, it is possible to obtain a high maximum energy product. If 2n is within the above range, it is possible to prevent the problem that the maximum energy product is reduced since a non-magnetic phase is generated due to large amounts of Ca, Sr, and La and, in turn, an excessive content of solid solution thereof; or that the maximum energy product is reduced since unreacted α-Fe₂O₃ is generated.

The process for preparing a ferrite magnetic material and a sintered magnet according to an embodiment of the present invention is as follows.

### <Mixing process>

First, the starting materials are weighed according to their weight percentages as calculated from a predetermined ratio of each element. The starting materials are generally wet mixed using a wet-type ball mill or a wet-type attritor, wherein they are uniformly and sufficiently mixed for 5 to 10 hours in the case of a wet-type ball mill or 2 to 4 hours in the case of a wet-type attritor. As the starting materials, SrCO₃, CaCO₃, La₂O₃, Fe₂O₃, Co₃O₄, and the like, which constitute a sintered ferrite magnet, may be used. Such impurities as Al₂O₃, Cr₂O₃, NiO, MnO, ZnO, SiO₂, MgO, BaO, P, and S may be contained in an amount of 0.1 to 1.0% by weight depending on the purity of the starting materials.

In order to facilitate the ferritization reaction and uniform the growth of the particles at a low calcining temperature at the time of calcination, 0.05 to 0.2 part by weight of H₃BO₃, based on 100 parts by weight of the starting materials, may be further mixed with the starting materials.

### <Calcination process>

The calcination process is a process in which the starting materials of the composition blended and mixed in the previous step are subjected to calcination to produce a calcined product having an M-type (i.e., magnetoplumbite-type) structure together with the ferritization reaction. Usually, the calcination is carried out in an oxidizing atmosphere in the air. It is preferred that the calcination is carried out in a temperature range of 1,150 to 1,250°C for 30 minutes to 2 hours. The longer the calcination time is, the higher the M-phase ratio is. But this leads to an increase in the manufacturing cost. The proportion of the M-phase, which is the primary phase of the calcined product, is preferably 90% or more, and the grain size in the structure is preferably 2 to 4 µm.

### <Coarse pulverization process>

Since the state of the calcined product upon the calcination is generally in the form of a granule or a clinker, the calcined product may be coarsely pulverized. The coarse pulverization may be carried out using a dry-type vibration mill or a dry-type ball mill, among which the dry-type vibration mill is preferred. The average particle diameter of the coarse powder upon the coarse pulverization may be 2 to 4 µm.

### <Fine pulverization process>

When the average particle diameter of the fine powder is 0.6 to 0.8 µm upon the fine pulverization process, it is possible to produce sufficient magnetic properties. If the average particle diameter of the fine powder is within the above range, it is possible to prevent the problems that the orientation is lowered due to an agglomeration of the ferrite magnetic powder, which deteriorates the magnetic properties, and the time for dewatering is increased due to leakage of the slurry at the time of pressing, which increases the manufacturing cost; and that multiple magnetic domains are generated, thereby abruptly reducing the coercive force, and a large amount of heat energy is required to secure a sufficient sintered density, which increases the manufacturing cost.

The fine pulverization may be carried out using a wet-type ball mill or a wet-type attritor. The pulverization time is inversely proportional to the pulverization energy and varies with the type of the pulverizer. Thus, the pulverization time may be adjusted depending on the pulverizer and the target particle diameter.

In addition, in order to control the growth and restraint of the particles during the sintering and to control the particle diameter of the crystal grains, SiO₂, CaCO₃, or a mixture thereof may be added as an additive during the fine pulverization. In order to facilitate the substitution effect and to control the particle growth during the sintering, Fe₂O₃, La₂O₃, SrCO₃, or Co₃O₄ may be added as an additive during the fine pulverization. In such event, if the amount of the additives is too small, the intended effect is insignificant. If the amount of the additives is excessive, an adverse effect is produced. Thus, each of the additives may be employed in an amount ranging from 0.1 to 10 parts by weight based on 100 parts by weight of the pulverized powder.

In addition, a dispersant may be added in order to improve the fluidity of the slurry during the pressing in a magnetic field, to lower the viscosity, and to enhance the orientation effect. Although both an aqueous dispersant and a non-aqueous dispersant may be used as the dispersant, an aqueous dispersant is preferably used in view of the environmental aspects during the preparation process. As the aqueous dispersant, an organic compound having a hydroxyl group and a carboxyl group, sorbitol, calcium gluconate, or the like may be used. The dispersant may be added in an amount ranging from 0.1 to 1.0 part by weight based on 100 parts by weight of the coarse powder. If the amount of the dispersant is within the above range, it is possible to prevent the problem that cracks are generated during the drying and sintering of a green body due to a decrease in the dewaterability.

### < Pressing process>

The pressing process may be carried out by a wet-type anisotropic pressing method. In the pressing process, a pressure is applied for molding while a magnetic field is applied, whereby a green body for a sintered anisotropic magnet is obtained.

As an example of the wet-type anisotropic pressing, the slurry upon the fine pulverization is subjected to dewatering and concentration, and it is then maintained at a certain concentration and is subjected to pressing in a magnetic field. The dewatering and concentration may be carried out using a centrifugal separator or a filter press. In such event, the slurry concentration may be 60 to 66% by weight, the pressing pressure may be 0.3 to 0.5 ton/cm², and the applied magnetic field may be 10 to 20 kOe.

The green body thus obtained has a residual water content of about 10 to 15% by weight. If the green body with the residual water is subjected to a sintering process, cracks may be generated in the course of dewatering while the temperature is raised. Thus, in order to prevent this, the green body may be naturally dried or dried at a low temperature of, e.g., 50 to 100°C in the atmosphere and then sintered.

### <Drying and sintering processes>

In general, the green body is dried and sintered in sequence in an oxidizing atmosphere in the air to produce a sintered ferrite magnet. For the purpose of removing water and dispersants remaining in the green body, the green body may be subjected to dewatering and degreasing at 50 to 100°C.

The magnetic properties of a sintered ferrite magnet can be enhanced by controlling the sintering conditions in the sintering process such as temperature elevation rate, maximum temperature, maintaining time at the maximum temperature, cooling rate, and so on. For example, the magnetic properties can be controlled by way of adjusting the sintering conditions (e.g., sintering time, temperature elevation rate, maximum temperature, and maintaining time at the maximum temperature), whereby the concentration of solid solution of the substitute elements in the crystal grains of a sintered ferrite magnet is increased, the crystal grain growth is controlled, the grain size is uniformly maintained, the density and the degree of orientation of the sintered product are controlled. The green body may be sintered for 30 minutes to 2 hours under the conditions of a temperature elevation rate of 1 to 10°C/min and a sintering maximum temperature of 1,200 to 1,250°C, and then cooled at a cooling rate of 1 to 10°C/min.

The sintered magnetoplumbite-type ferrite magnet of the present invention prepared in the manner as described above has a maximum energy product ((BH)ₘₐₓ) of 5.5 MGOe or more, while the saturation magnetization (4πIs) is 4.8 kG or more and the anisotropic magnetic field (H_{A}) is 26 kOe or more. The 4πI-H curve relates to magnetization, which indicates an operation of generating a magnetic moment and a magnetic polarization by applying a magnetic field to a magnetic product. It represents the characteristics inside the magnet (i.e., inherent to the magnet).

In addition, the present invention provides a segment-type or a block-type permanent magnet derived from the ferrite magnetic material.

Further, the permanent magnet of the present invention can be advantageously used in various products such as rotors, sensors, bond magnets, and the like for automobiles, electric devices, and home appliances.

### Embodiments for Carrying out the Invention

Hereinafter, the present invention is explained in more detail by the following examples. But the following Examples are intended to further illustrate the present invention without limiting its scope thereto.

### Example

### Reference Example: Measurement of magnetic properties and density

The sintered ferrite magnets prepared in the Production Examples below were each measured for the maximum energy product ((BH)ₘₐₓ) using a B-H Curve Tracer with a maximum magnetic field applied of 25 kOe (or 1,990 kA/m) at 20°C in the atmosphere. In addition, the sintered ferrite magnets were each cut to a width of 5 mm and a thickness of 5 mm, which was then measured for the saturation magnetization (4πIs) and the anisotropic magnetic field (H_{A}) in the first quadrant of the 4πI-H curve for the planes perpendicular and parallel to the orientation plane, respectively. The density of the ferrite magnet was measured by the Archimedes method.

### Preparation Example 1

### Preparation Example 1-1: Mixing process

Ferric oxide (Fe₂O₃ in a purity of 99% or more), strontium carbonate (SrCO₃), calcium carbonate (CaCO₃), lanthanum oxide (La₂O₃), and cobalt oxide (Co₃O₄) were used as starting materials. These starting materials were blended so as to produce a ferrite magnet of Ca_{(1-x-y)}SrₓLa_{y}Fe₍₂ₙ₋ₘ₎CoₘO₁₉, which satisfies the composition shown in Table 1 below. In order to facilitate the ferrite reaction, 0.1% by weight of H₃BO₃ was added to the blended raw materials based on the total weight thereof. The blended raw materials were mixed with water to a concentration of 40% by weight, followed by wet circulation mixing for 2 hours. The raw materials thus obtained were dried at 130°C for 24 hours.

### Preparation Example 1-2: Calcination process

The powder dried in Preparation Example 1-1 was calcined at 1,200°C for 1 hour in the atmosphere to obtain a calcined product.

### Preparation Example 1-3: Coarse pulverization and fine pulverization processes

The calcined product of Preparation Example 1-2 was pulverized into a coarse powder having an average particle diameter of 4 µm using a dry-type vibration mill. In order to finely pulverize the coarsely pulverized powder, the coarsely pulverized powder and water were charged to a circulation-type attritor such that the concentration of the coarsely pulverized powder was 40% by weight. Further, 1.0% by weight of CaCO₃, 0.40% by weight of SiO₂, and 0.6% by weight of calcium gluconate were added thereto (based on the total amount of the coarsely pulverized powder) to obtain a composition for a sintered product as shown in Table 1 above. The average particle diameter of the powder upon the fine pulverization was adjusted to be 0.65 µm.

### Preparation Example 1-4: Pressing process

The slurry, which was a mixture of the finely pulverized powder and water as obtained in Preparation Example 1-3, was dewatered such that the concentration of the finely pulverized powder was 63% by weight. It was then made to a pressed product sample in the form of a disk (a diameter of 40 mm × a thickness of 11 mm) using a wet-type magnetic field press, in which the magnetic field was applied in the direction parallel to the direction of pressing. In such event, the magnetic field intensity was set to 10 kOe (or 796 kA/m), and the pressing pressure was set to 0.4 ton/cm².

### Preparation Example 1-5: Sintering process

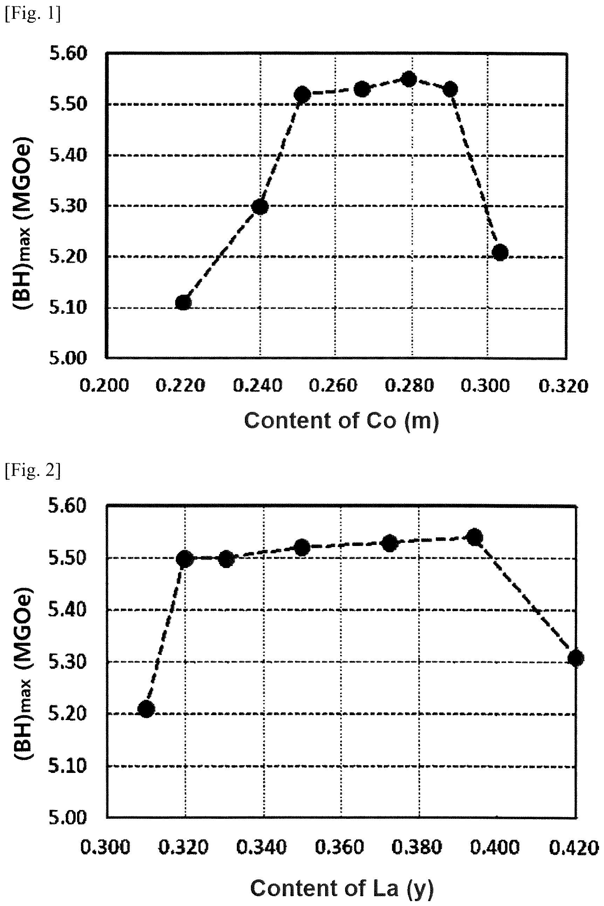

The green body obtained in Preparation Example 1-4 was sintered at 1,210°C for 1 hour, and the sintered product thus obtained was processed to a thickness of 7 mm using a double-side thickness processing machine to thereby obtain a sintered ferrite magnet. In addition, the sintered ferrite magnets thus obtained were each measured for the magnetic properties and the density. The results are shown in Table 1 below. The change in the maximum magnetic energy ((BH)ₘₐₓ) with respect to a change in the content of Co (m) of the sintered ferrite magnets thus obtained is shown in Fig. 1.

**[Table 1]**

| Sample No. | Sr (x) | Fe (2n - m) | La (y) | Ca (1 - x - y) | Co (m) | 2n | Sintering density (g/cm³) | 4πIs (kG) | H_{A} (kOe) | (BH)ₘₐₓ (MGOe) |
|---|---|---|---|---|---|---|---|---|---|---|
| 1 | 0.170 | 9.355 | 0.385 | 0.445 | 0.303 | 9.66 | 5.094 | 4.75 | 27.0 | 5.21 |
| 2 | 0.170 | 9.367 | 0.385 | 0.445 | 0.290 | 9.66 | 5.103 | 4.82 | 26.8 | 5.53 |
| 3 | 0.170 | 9.381 | 0.385 | 0.445 | 0.279 | 9.66 | 5.105 | 4.85 | 26.6 | 5.55 |
| 4 | 0.170 | 9.390 | 0.385 | 0.445 | 0.267 | 9.66 | 5.098 | 4.84 | 26.4 | 5.53 |
| 5 | 0.170 | 9.411 | 0.385 | 0.445 | 0.251 | 9.66 | 5.108 | 4.82 | 26.3 | 5.52 |
| 6 | 0.170 | 9.420 | 0.385 | 0.445 | 0.240 | 9.66 | 5.099 | 4.77 | 25.5 | 5.30 |
| 7 | 0.170 | 9.435 | 0.385 | 0.445 | 0.220 | 9.66 | 5.098 | 4.72 | 24.8 | 5.11 |

As shown in Table 1, Samples 1, 6, and 7 are the Comparative Examples, and Samples 2 to 5 are the Examples of the present invention.

When the content of Co (m) was in the range of 0.251 to 0.29, the maximum energy product ((BH)ₘₐₓ) was 5.5 MGOe or more, which was remarkably higher than that of the Comparative Examples whose content of Co (m) fell outside the above range.

### Preparation Example 2

Sintered ferrite magnets were produced in the same manner as in Preparation Example 1, except that the composition ratio of the sintered product including the content of La (y) was changed as shown in Table 2 below. The sintered ferrite magnets thus obtained were each measured for the magnetic properties and the density. The results are shown in Table 2 below. In addition, the change in the maximum magnetic energy ((BH)ₘₐₓ) with respect to a change in the content of La (y) of the sintered ferrite magnets thus obtained is shown in Fig. 2.

**[Table 2]**

| Sample No. | Sr (x) | Fe (2n-m) | La (y) | Ca (1-x-y) | Co (m) | 2n | Sintering density (g/cm³) | 4πIs (kG) | H_{A} (kOe) | (BH)ₘₐₓ (MGOe) |
|---|---|---|---|---|---|---|---|---|---|---|
| 8 | 0.135 | 9.402 | 0.420 | 0.445 | 0.265 | 9.67 | 5.112 | 4.77 | 25.8 | 5.31 |
| 9 | 0.146 | 9.402 | 0.394 | 0.460 | 0.265 | 9.67 | 5.107 | 4.85 | 26.5 | 5.54 |
| 10 | 0.157 | 9.404 | 0.372 | 0.471 | 0.265 | 9.67 | 5.105 | 4.84 | 26.5 | 5.53 |
| 11 | 0.166 | 9.413 | 0.350 | 0.485 | 0.260 | 9.67 | 5.106 | 4.84 | 26.5 | 5.52 |
| 12 | 0.175 | 9.419 | 0.330 | 0.495 | 0.260 | 9.68 | 5.101 | 4.82 | 26.4 | 5.50 |
| 13 | 0.178 | 9.419 | 0.320 | 0.502 | 0.260 | 9.68 | 5.093 | 4.81 | 26.4 | 5.50 |
| 14 | 0.181 | 9.422 | 0.310 | 0.509 | 0.260 | 9.68 | 5.084 | 4.73 | 26.0 | 5.21 |

As shown in Table 2, Samples 8 and 14 are the Comparative Examples, and Samples 9 to 13 are the Examples of the present invention.

When the content of La (y) was in the range of 0.32 to 0.394, the maximum energy product was 5.5 MGOe or more. When the content of La exceeded 0.394, the maximum energy product was reduced due to orthoferrite, which is a non-magnetic phase formed by La that was not employed in the ferrite primary phase. When it was less than 0.32, the content of substitutional solid solution of La was not sufficient, which lowered 4πIs, whereby a maximum energy product as required in the present invention was not obtained.

### Preparation Example 3

Sintered ferrite magnets were produced in the same manner as in Preparation Example 1, except that the content of Ca (i.e., 1 - x - y) was changed as shown in Table 3 below. The sintered ferrite magnets thus obtained were each measured for the magnetic properties and the density. The results are shown in Table 3 below.

**[Table 3]**

| Sample No. | Sr (x) | Fe (2n-m) | La (y) | Ca (1-x-y) | Co (m) | 2n | Sintering density (g/cm³) | 4πIs (kG) | H_{A} (kOe) | (BH)ₘₐₓ (MGOe) |
|---|---|---|---|---|---|---|---|---|---|---|
| 15 | 0.092 | 9.409 | 0.370 | 0.538 | 0.265 | 9.67 | 5.121 | 4.75 | 24.3 | 5.15 |
| 16 | 0.110 | 9.408 | 0.370 | 0.520 | 0.265 | 9.67 | 5.114 | 7.83 | 26.2 | 5.51 |
| 17 | 0.131 | 9.411 | 0.370 | 0.499 | 0.265 | 9.68 | 5.108 | 4.83 | 26.3 | 5.52 |
| 18 | 0.149 | 9.407 | 0.370 | 0.481 | 0.265 | 9.67 | 5.111 | 4.85 | 26.4 | 5.54 |
| 19 | 0.172 | 9.405 | 0.370 | 0.458 | 0.265 | 9.67 | 5.107 | 4.85 | 26.4 | 5.53 |
| 20 | 0.189 | 9.412 | 0.370 | 0.441 | 0.265 | 9.68 | 5.106 | 4.82 | 26.5 | 5.52 |
| 21 | 0.210 | 9.408 | 0.370 | 0.420 | 0.265 | 9.67 | 5.102 | 4.81 | 26.2 | 5.50 |
| 22 | 0.230 | 9.406 | 0.370 | 0.400 | 0.265 | 9.67 | 5.095 | 4.73 | 25.5 | 5.30 |

As shown in Table 3, Samples 15 and 22 are the Comparative Examples, and Samples 16 to 21 are the Examples of the present invention.

When the content of Ca (i.e., 1 - x - y) was in the range of 0.42 to 0.52, the maximum energy product was 5.5 MGOe or more. When the content of Ca (i.e., 1 - x - y) was less than 0.42, the saturation magnetization and the anisotropic magnetic field were reduced due to a decrease in the the content of substitutional solid solution of Ca, whereby a high maximum energy product was not obtained. In addition, when the content of Ca exceeded 0.52, the anisotropic magnetic field (H_{A}) and the maximum energy product were reduced due to the phase instability caused by an abrupt growth of grains.

### Preparation Example 4

Sintered ferrite magnets were produced in the same manner as in Preparation Example 1, except that 2n was changed as shown in Table 4 below. The sintered ferrite magnets thus obtained were each measured for the magnetic properties and the density. The results are shown in Table 4 below.

**[Table 4]**

| Sample No. | Sr (x) | Fe (2n-m) | La (y) | Ca (1-x-y) | Co (m) | 2n | Sintering density (g/cm³) | 4πIs (kG) | H_{A} (kOe) | (BH)ₘₐₓ (MGOe) |
|---|---|---|---|---|---|---|---|---|---|---|
| 23 | 0.170 | 8.651 | 0.370 | 0.460 | 0.265 | 8.92 | 5.117 | 4.70 | 24.7 | 5.15 |
| 24 | 0.170 | 8.735 | 0.370 | 0.460 | 0.265 | 9.00 | 5.115 | 4.83 | 26.4 | 5.51 |
| 25 | 0.170 | 9.064 | 0.370 | 0.460 | 0.265 | 9.32 | 5.114 | 4.83 | 26.6 | 5.52 |
| 26 | 0.170 | 9.353 | 0.370 | 0.460 | 0.265 | 9.61 | 5.108 | 4.84 | 26.7 | 5.53 |
| 27 | 0.170 | 9.730 | 0.370 | 0.460 | 0.265 | 10.00 | 5.104 | 4.82 | 26.5 | 5.51 |
| 28 | 0.170 | 9.911 | 0.370 | 0.460 | 0.265 | 10.18 | 5.085 | 4.75 | 26.8 | 5.29 |

As shown in Table 4, Samples 23 and 28 are the Comparative Examples, and Samples 24 to 27 are the Examples of the present invention.

When 2n was in the range of 9.0 to 10.0, the maximum energy product was 5.5 MGOe or more. When 2n was less than 9.0, all of the elements except Fe were present in relatively large amounts and the content of substitutional solid solution was excessive, so that the saturation magnetization and the anisotropic magnetic field were reduced, which lowered the maximum energy product. In addition, when 2n exceeded 10.0, the saturation magnetization and the anisotropic magnetic field were reduced due to the formation of unreacted α-Fe₂O₃, which lowered the maximum energy product.

## Claims

1. A sintered ferrite magnet, which is obtainable by sintering a ferrite magnetic material, which comprises a primary phase of a magnetoplumbite phase having a hexagonal structure, wherein the element constituting the primary phase comprises a composition represented by the following Formula 1,
wherein the sintered ferrite magnet has a maximum energy product ((BH)ₘₐₓ) of 5.5 MGOe or more, while the saturation magnetization (4πIs) is 4.8 kG or more and the anisotropic magnetic field (H_{A}) is 26 kOe or more:
[Formula 1] Ca_{(1-x-y)}SrₓLa_{y}Fe₍₂ₙ₋ₘ₎CoₘO₁₉
wherein
0.32 ≤ y ≤ 0.394,
0.251 ≤ m ≤ 0.29,
0.42 ≤ 1-x-y ≤ 0.52, and
9.0 ≤ 2n ≤ 10.0.

2. The sintered ferrite magnet of claim 1, wherein y satisfies 0.35 ≤ y ≤ 0.394.

3. The sintered ferrite magnet of claim 1, wherein 1- x - y satisfies 0.44 ≤ 1 - x - y ≤ 0.50.

## Patentansprüche

1. Ein Ferritsintermagnet, welcher erhältlich ist durch Sintern eines magnetischen Ferritmaterials, welches eine primäre Phase aus einer Magnetoplumbitphase mit einer hexagonalen Struktur umfasst, wobei das Element, aus dem die primäre Phase besteht, eine durch die folgende Formel 1 dargestellte Zusammensetzung umfasst,
wobei der Ferritsintermagnet ein maximales Energieprodukt ((BH)ₘₐₓ) von 5,5 MGOe oder mehr aufweist, während die Sättigungsmagnetisierung (4πIs) 4,8 kG oder mehr beträgt und das anisotrope Magnetfeld (H_{A}) 26 kOe oder mehr beträgt:
[Formel 1] Ca_{(1-x-y)}SrₓLa_{y}Fe₍₂ₙ₋ₘ₎CoₘO₁₉
wobei
0,32 ≤ y ≤ 0,394,
0,251 ≤ m ≤ 0,29,
0,42 ≤ 1-x-y ≤ 0,52 und
9,0 ≤ 2n ≤ 10,0.

2. Der Ferritsintermagnet nach Anspruch 1, wobei y die Bedingung 0,35 ≤ y ≤ 0,394 erfüllt.

3. Der Ferritsintermagnet nach Anspruch 1, wobei 1-x-y die Bedingung 0,44 ≤ 1-x-y ≤ 0,50 erfüllt.

## Revendications

1. Aimant en ferrite frittée, qui peut être obtenu par frittage d'un matériau magnétique en ferrite, qui comprend une phase primaire d'une phase de magnéto-plombite ayant une structure hexagonale, dans lequel l'élément constituant la phase primaire comprend une composition représentée par la formule 1 qui suit,
lequel aimant en ferrite frittée a un produit énergétique maximal ((BH)ₘₐₓ) de 5,5 MGOe ou plus, tandis que la magnétisation à saturation (4πIs) est de 4,8 kG ou plus et le champ magnétique anisotropique (H_{A}) est de 26 kOe ou plus :
[formule 1] Ca_{(1-x-y)}SrₓLa_{y}Fe₍₂ₙ₋ₘ₎CoₘO₁₉
dans laquelle
0,32 ≤ y ≤ 0,394,
0,251 ≤ m ≤ 0,29,
0,42 ≤ 1 - x - y ≤ 0,52, et
9,0 ≤ 2n ≤ 10,0.

2. Aimant en ferrite frittée selon la revendication 1, dans lequel y satisfait à 0,35 ≤ y ≤ 0,394.

3. Aimant en ferrite frittée selon la revendication 1, dans lequel 1 - x - y satisfait à 0,44 ≤ 1 - x - y ≤ 0,50.
